# EUROPEAN PATENT SPECIFICATION

(11) **EP 2 626 589 B1**
(45) Date of publication and mention of the grant of the patent: **18.05.2016**
(21) Application number: 13154347.2
(22) Date of filing: 07.02.2013
(51) Int. Cl.: F16D 65/56, F16D 51/20, F16D 125/40, F16D 129/04

(54) **Automatic play adjustment device for a drum brake**
Automatische Nachstellvorrichtung für eine Trommelbremse
Dispositif de réglage de jeu automatique pour frein à tambour

(30) Priority: 07.02.2012 IT TO20120097
(43) Date of publication of application: 14.08.2013
(73) Proprietor: Daico Automotive Products S.p.a., 10072 Mappano di Caselle Torinese (TO) (IT)
(72) Inventor: Mignatta, Alberto, 10152 Torino (IT); Palmisano, Pietro, 10128 Torino (IT)
(74) Representative: Rondano, Davide

(56) References cited:
- EP-A2- 0 262 014
- FR-A1- 2 929 363
- US-A1- 2003 226 729
- US-B1- 6 196 360
- US-B2- 6 691 838

## Description

The present invention relates to an automatic play adjustment device for a drum brake designed to adjust automatically the play of the shoes of the drum brake so as to compensate for the wear of the friction pads of the shoes.

An adjustment device of the above type is known from EP-A-0 262 014. According to this known example, the automatic play adjustment device (indicated hereinbelow simply as adjustment device) basically comprises a body intended to cooperate with one of the two shoes (indicated hereinbelow as first shoe) of the brake and a screw and nut screw mechanism intended to cooperate with the other shoe (indicated hereinbelow as second shoe). The body is provided, at its end facing the first shoe, with an abutment or bearing portion having a seat which, in the condition where the device is assembled on the brake, is urged against and engages in a corresponding seat provided on the first shoe. The body also has, at its opposite end, namely its end facing the second shoe in the condition where the device is assembled on the brake, a non-threaded cylindrical hole. The screw and nut screw mechanism comprises a screw having a head and a threaded shank, the head being constrained, with no possibility of relative rotation, to the second shoe by means of a spring, while the threaded shank is inserted into the aforementioned hole so as to be free to slide along the axis of the latter relative to the body. The screw and nut screw mechanism also comprises a nut screw which is screwed onto the threaded shank of the screw between the head of the screw and the body. The nut screw has external teeth with which a ratchet mounted on the projecting end of a flat spring cooperates, the opposite end of said flat spring being rigidly fixed to the body. The ratchet is kept normally disengaged from the external teeth of the nut screw by means of a bell crank having a first arm which is axially arranged between the nut screw and the end of the body facing the second shoe and a second arm which forms an angle greater than 90° with the first arm and is radially arranged between the body and the flat spring, such that, when the nut screw and the body move towards each other, the bell crank is rotated and therefore moves the projecting portion of the flat spring away from the body, thus causing disengagement of the ratchet from the external teeth of the nut screw. The first arm of the bell crank has a hole through which the threaded shank of the screw passes freely. This adjustment device also comprises a bimetallic flat element which, at a first end thereof, is rigidly fixed to the body and with its opposite projecting end is able, if a given temperature threshold level is exceeded, to engage the second arm of the bell crank, locking it, so as to prevent operation of the adjustment device.

It is an object of the present invention to provide an automatic play adjustment device for a drum brake which is easy to install, which can be adapted with the minimum possible number of modifications to drum brakes of different sizes, which does not require the use of springs for connecting the device to the brake shoes and which allows rapid compensation of the play produced by the wear of the friction pads of the brake.

This and other objects are fully achieved according to the present invention by virtue of an automatic play adjustment device for a drum brake having the characteristics specified in the accompanying independent Claim 1.

Advantageous embodiments of the invention form the subject of the dependent claims, the contents of which are to be understood as forming an integral and integrating part of the description which follows.

The characteristics and advantages of the invention will emerge clearly from the following detailed description, given purely by way of a non-limiting example with reference to the accompanying drawings in which:
Figure 1 is a front view of a drum brake provided with an automatic play adjustment device according to a preferred embodiment of the present invention;
Figure 2 is an exploded view of the automatic play adjustment device with which the drum brake of Figure 1 is provided;
Figure 3 is an axonometric view of the automatic play adjustment device of Figure 2; and
Figures 4 and 5 are front views of the automatic play adjustment device of Figure 2 in two different operating positions.

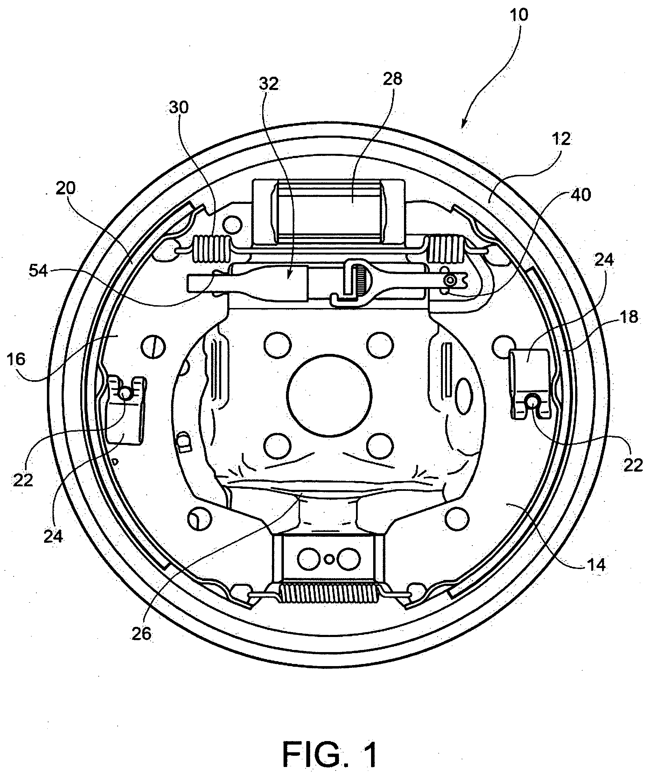

With reference initially to Figure 1, a drum brake for a vehicle is generally indicated 10 and comprises, in a manner known per se, a drum 12 intended to be fixed to the hub of a vehicle wheel 2 (the drum 12 is shown in Figure 1 sectioned along a plane perpendicular to the axis of the wheel), two shoes 14 and 16 (indicated hereinbelow as first shoe and second shoe, respectively) which are provided with respective friction pads 18 and 20 intended to cooperate with a braking surface of the drum 12 so as to exert on the latter a braking torque and are constrained, in a manner known per se, by means of pins 22 and springs 24 to a wheel-carrying structure 26, and an actuator 28, in particular a hydraulic linear actuator, designed to operate the shoes 14 and 16 so as to push the respective friction pads 18 and 20 against the braking surface of the drum 12. According to the example of embodiment shown in Figure 1, the actuator 28 is arranged between the top ends of the shoes 14 and 16, such that, as a result of the extension of the actuator 28, the friction pads 18 and 20 are pushed against the braking surface of the drum 12. The brake drum 10 also comprises, in a manner known per se, a bias spring 30 which extends parallel to the direction of extension/compression of the actuator 28 and is configured to exert on the shoes 14 and 16 a force tending to move them towards each other, i.e. to move the respective friction pads 18 and 20 away from the braking surface of the drum 12. In parallel with the actuator 28 and the bias spring 30 there is also provided an automatic play adjustment device (indicated hereinbelow simply as adjustment device) which is generally indicated 32 and extends along a direction x indicated below as axial or longitudinal direction.

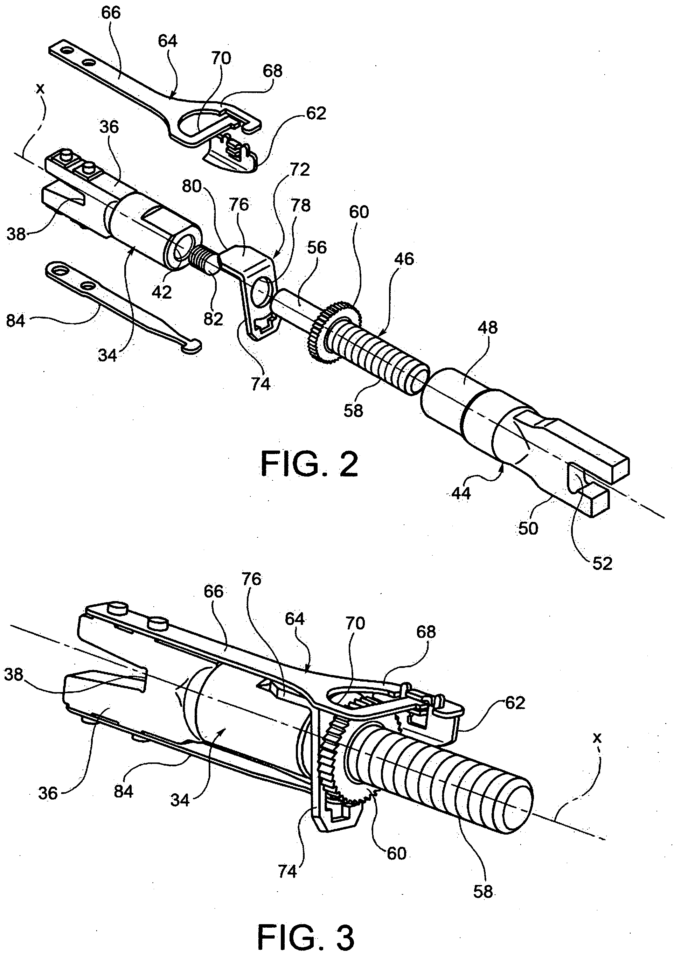

With reference also to Figures 2 to 5, the adjustment device 32 comprises a body 34 intended to cooperate with one of the two shoes (in the proposed embodiment, with the first shoe 14) of the drum brake 10 and an adjustment mechanism intended to cooperate with the other shoe (in the proposed embodiment, with the second shoe 16).

The body 34 is provided, at its end facing the first shoe 14, with an abutment or bearing portion 36 having a seat 38 which, in the condition where the device is assembled on the brake, is pushed against and engages in a corresponding seat 40 provided on the first shoe 14, so as to lock the body 34 with respect to the first shoe 14 both rotationally about the longitudinal direction x and translationally along the longitudinal direction x towards this shoe. The body 34 also has, at its opposite end, namely its end facing the second shoe 16, a cylindrical hole 42 made as a non-threaded hole. The body 34 is preferably made as a single piece of metallic material obtained for example by means of machining or casting.

The adjustment mechanism comprises a screw and nut screw mechanism consisting of a nut screw 44 intended to cooperate with the second shoe 16 and a screw 46 axially arranged between the body 34 and the nut screw 44. The nut screw 44 includes, on the side facing the body 34, a body 48 with a generally cylindrical shape having a threaded cylindrical hole (not shown) and, on the opposite side, namely the side facing the second shoe 16, an abutment or bearing portion 50 having a seat 52 which, in the condition where the device is assembled on the brake, is pushed against and engages in a corresponding seat 54 provided on the second shoe 16 so as to lock the nut screw 44 with respect to the second shoe 16 both rotationally about the longitudinal direction x and translationally along the longitudinal direction x towards this shoe. The nut screw 44 is preferably made as a single piece of metallic material obtained for example by means of machining or casting. The screw 46 extends along the longitudinal direction x and includes integrally a non-threaded shank portion 56 received inside the hole 42 of the body 34 so as to be free to slide along the axis of this hole (i.e. along the longitudinal direction x) and a threaded shank portion 58 onto which the nut screw 44 is screwed, whereby a rotational movement of the screw 46 with respect to the nut screw 44 (which, as already mentioned, is rotationally locked about the longitudinal direction x, i.e. about its axis) produces a relative translational movement of these two components.

The adjustment mechanism also comprises a ratchet gear consisting of a gearwheel 60 and of a ratchet 62 cooperating with the teeth of the gearwheel 60. The gearwheel 60 is rigidly connected to the screw 46, in particular between the two shank portions 56 and 58, so as to be drivingly connected for rotation with said screw. Preferably, the gearwheel 60 is formed in one piece with the screw 46. The ratchet 62 is mounted on a flat spring 64 which is rigidly connected at one of its ends to the body 34, so as to be able to engage with, or disengage from, the teeth of the gearwheel 60. In the proposed embodiment, the ratchet 62 is formed as a part separate from the flat spring 64 and is rigidly connected to it, but could also be formed in one piece with the flat spring 64. The flat spring 64 comprises an elongated portion 66, which extends parallel to the longitudinal direction x and is rigidly connected, for example by means of riveting, at one of its ends to the body 34, in particular to the abutment portion 36 of the latter, and a head portion 68 which extends from the end of the elongated portion 66 opposite to the one connected to the body 34. The ratchet 62 is fixed to, or formed in one piece with, the head portion 68 of the flat spring 64. Owing to the elastic deformation of the elongated portion 66 of the flat spring 64, the ratchet 62, which is drivingly connected to the head portion 68 of the flat spring 64, moves towards or away from the gearwheel 60. In particular, in the undeformed condition of the flat spring 64, the ratchet 62 engages with the teeth of the gearwheel 60, whereas when the flat spring 64 is deformed so that the head portion 68 moves away from the gearwheel 60, the ratchet 62 disengages from the teeth of the gearwheel 60. As long as the deformation of the flat spring 64 is such that the ratchet 62 moves into the space between one tooth of the teeth 60 and the following tooth, the ratchet 62 always engages with the same tooth in the undeformed condition of the flat spring 64. On the other hand, if the deformation of the flat spring 64 is such that the ratchet 62 jumps over the tooth with which it engaged previously, then when the flat spring 64 returns into the undeformed condition, the ratchet 62 will engage with a following tooth, which may be the immediately adjacent tooth or a tooth even further away depending on the amount of deformation of the flat spring 64. This will cause rotation of the gearwheel 60, and of the screw 46 together with it, corresponding to the angular distance between the preceding tooth (i.e. the tooth with which the ratchet 62 was previously engaged) and the following tooth (i.e. the new tooth with which the ratchet 62 engages) of the gearwheel 60. The head portion 68 of the flat spring 64 has an opening 70 from which the gearwheel 60 partly projects and which serves to constrain the gearwheel 60, and hence the screw 46 in general, to the body 34 and therefore prevent the assembly formed by the screw 46 and the nut screw 44 from separating from the body 34.

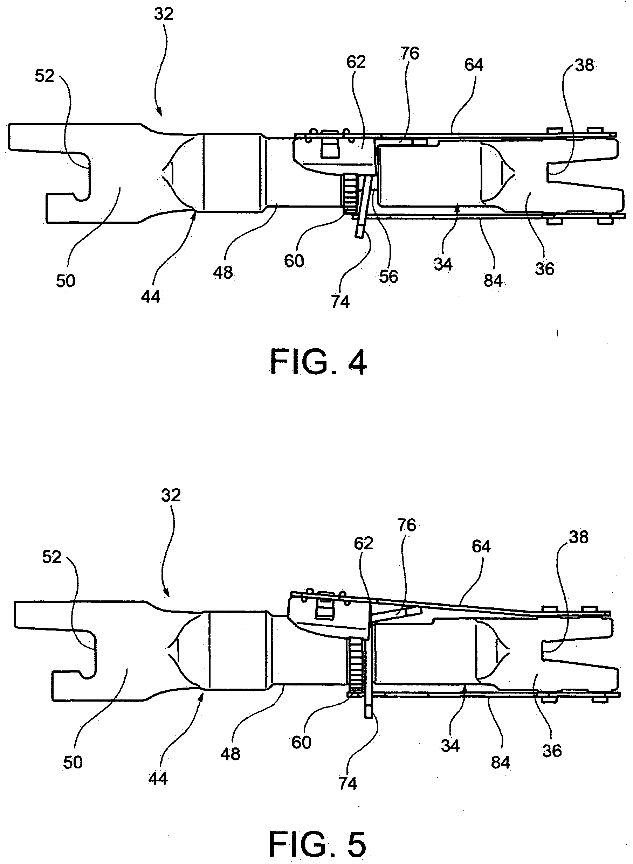

The adjustment mechanism further comprises a bell crank 72 having a first arm 74 and a second arm 76 which forms an angle greater than 90° with the first arm. The first arm 74 is axially arranged between the gearwheel 60 and the body 34 and has a through-hole 78 through which the non-threaded shank portion 56 of the screw 46 passes freely. The second arm 76 is radially arranged between the body 34 and the flat spring 64 and in particular presses with a free edge 80 thereof against the elongated portion 66 of the flat spring 64. The bell crank 72 has the function of converting the relative translational movement of the screw 46 and the body 34 along the longitudinal direction x into a deformation of the elongated portion 66 of the flat spring 64 and therefore into a movement of the ratchet 62 with respect to the gearwheel 60. Starting from the rest condition of the adjustment device 32 shown in Figure 4, when the screw 46, and together with it the gearwheel 60, is pushed towards the body 34, the first arm 74 of the bell crank 72 rotates, as shown in Figure 5. This rotation, which according to the viewpoint of the person observing Figures 4 and 5 is an anti-clockwise rotation, is rigidly transmitted to the second arm 76 of the bell crank 72 and causes a deformation of the elongated portion 66 of the flat spring 64 tending to move the head portion 68 of the flat spring 64 away from the body 34, and therefore to disengage the ratchet 62 from the gearwheel 60. If the relative movement of the screw 46 with respect to the body 34, which corresponds to the relative movement of the two shoes 14 and 16 of the drum brake 10, is such as to cause a tooth to be jumped over, i.e. is such as to cause the ratchet 62 to engage with a following tooth of the gearwheel 60, then when the flat spring 64 causes the ratchet 62 to engage again with the gearwheel 60, the latter undergoes a rotation corresponding to the angular distance between the tooth of the gearwheel 60 with which the ratchet 62 was previously engaged and the tooth with which it is now engaged. This rotation of the gearwheel 60, and therefore of the screw 46, produces, as a result of the engagement of the threaded shank portion 58 of the screw 46 in the threaded hole of the nut screw 44, a relative movement of the nut screw 44 away from the screw 46, and therefore from the body 34.

A spring 82 is inserted inside the cylindrical hole 42 of the body 34 (Figure 2), which spring is preferably made as a cylindrical helical spring and acts between the bottom of the hole 42 and the non-threaded shank portion 56 of the screw 46 so as to tend to oppose insertion of the shank portion 56 into the hole 42 or favour the expulsion of the shank portion 56 from the hole 42 when said portion is pushed towards the inside of the hole 42. The spring 82 therefore supports the elastic bias action already exerted on the screw 46 by the flat spring 64, namely by the elongated portion 66 of the latter, via the bell crank 72. Obviously, despite the elastic action exerted by the spring 82 on the screw 46 and tending to expel the latter out of the body 34, the screw 46 remains constrained to the body 34 owing to the fact that the gearwheel 60 engages in the opening 70 of the head portion 68 of the flat spring 64, which spring is constrained to the body 34.

Preferably, the adjustment device 32 also comprises a bimetallic flat element 84 which at its first end (facing the first shoe 14) is rigidly fixed to the body 34, in particular to the abutment portion 36 of the latter, for example by means of riveting, and with its opposite projecting end is able, should a given temperature threshold value be exceeded, to engage with the first arm 74 of the bell crank 72, locking it, so as to prevent operation of the adjustment device and therefore prevent the latter from acting in order to compensate for variations in the relative distance of the shoes 14 and 16 which are not due to wear of the respective friction shoes 18 and 20, but to heat expansion.

In the light of the description provided above, the advantages which may be achieved by an adjustment device according to the present invention are evident.

Firstly, owing to the fact that all the components of the adjustment mechanism, except for the nut screw, are mounted on the body, being fixed to the latter (such as the flat spring) or constrained by the latter in some way (such as the screw), the adjustment device may be adapted to drum brakes of different sizes (i.e. diameters) either by replacing the existing nut screw with a new nut screw which has a different, greater or smaller, length depending on whether the size of the brake is greater or smaller, or by simply varying the axial position of the nut screw along the threaded shank portion of the screw, therefore leaving unvaried all the remaining components of the device. This clearly results in the possibility, on the one hand, of reducing the manufacturing costs, and, on the other hand, of broadening the scope of application of the device.

Moreover, owing to the fact that the threaded shank portion of the screw which cooperates with the nut screw and the gearwheel which cooperates with the ratchet are rigidly connected to each other, and in particular form one piece, the problems of play, vibration, interference and wear of the adjustment device are reduced.

Moreover, the arrangement of an elastic element between the screw and the body acting on these components so as to tend to move them away from each other, and therefore push the nut screw and the body against the respective shoes, allows a rapid response of the device in case it must intervene in order to compensate for the play produced by the wear of the friction pads on the shoes.

Finally, the adjustment device according to the invention may be easily mounted on the brake, since it does not require springs (as instead occurs with the device known from the prior document cited in the introductory part of the description) for connection of the body and the nut screw to the respective shoes.

Obviously, the principle of the invention remaining unchanged, the embodiments and the constructional details may be greatly modified with respect to those described and illustrated purely by way of a non-limiting example, without thereby departing from the scope of the invention as defined in the accompanying claims.

## Claims

1. Automatic play adjustment device (32) for a drum brake (10), comprising a body (34) intended to cooperate with a first shoe (14) of the drum brake (10) and an adjustment mechanism (44, 46, 60, 62, 72) intended to cooperate with a second shoe (16) of the drum brake (10) in order to adjust the distance, in the rest condition, between said shoes (14, 16) depending on the wear level of friction pads (18, 20) provided on said shoes (14, 16), wherein the body (34) is provided, at its end opposite to the adjustment mechanism (44, 46, 60, 62, 72), with an abutment portion (36) designed to be pushed against, and to engage with, the first shoe (14), and has, at its end facing the adjustment mechanism (44, 46, 60, 62, 72), a hole (42), the axis of which extends along a longitudinal direction (x) of the adjustment device (32),
wherein the adjustment mechanism (44, 46, 60, 62, 64, 72) comprises a nut screw (44) and a screw (46) which extend along the longitudinal direction (x), the nut screw (44) being designed to be pushed against the second shoe (16) and to be constrained to the latter with no possibility of relative rotation about said longitudinal direction (x) and the screw (46) including a first shank portion (56) received in the hole (42) of the body (34) so as to be free to slide along said longitudinal direction (x) relative to the body (34), and a second threaded shank portion (58) on which the nut screw (44) is screwed, whereby rotation of the screw (46) relative to the nut screw (44) produces a relative translational movement of these two components along said longitudinal direction (x),
wherein the adjustment mechanism (44, 46, 60, 62, 64, 72) further comprises a ratchet gear (60, 62) including a gearwheel (60), which is longitudinally arranged between said first and second screw portions (56, 58) and rigidly connected thereto, and a ratchet (62) designed to cooperate with the teeth of the gearwheel (60),
wherein the adjustment mechanism (44, 46, 60, 62, 64, 72) further comprises an elastically deformable connection element (64) which connects the ratchet (62) to the body (34) and is configured so as to keep, in the rest condition, the ratchet (62) engaged with the gearwheel (60) and to cause, as a result of its deformation, disengagement of the ratchet (62) from the gearwheel (60), and
wherein the adjustment mechanism (44, 46, 60, 62, 64, 72) further comprises deformation means (72) designed to deform the connection element (64) depending on the amount of the relative translational movement of the body (34) with respect to the nut screw (44) along the longitudinal direction (x) resulting from the relative movement of the two shoes (14, 16) of the drum brake (10), whereby, as long as the amount of the relative translational movement of the body (34) with respect to the nut screw (44) does not exceed a given threshold, the ratchet (62) remains engaged with a same tooth of the gearwheel (60), whereas when the amount of the relative translational movement of the body (34) with respect to the nut screw (44) exceeds said threshold, due to the wear of friction pads (18, 20) provided on the shoes (14, 16) of the drum brake (10), the ratchet (62) engages with a following tooth of the gearwheel (60), thereby causing the gearwheel (60) to rotate and hence the screw (46) to translate relative to the nut screw (44) along the longitudinal axis (x).

2. Adjustment device (32) according to claim 1, wherein the screw (46) and the gearwheel (60) are made as a single piece.

3. Adjustment device (32) according to claim 1 or claim 2, further comprising elastic means (82) acting between the body (34) and the screw (46) so as to tend to eject the latter from the hole (42) of the body (34).

4. Adjustment device (32) according to claim 3, wherein said elastic means (82) comprise a spring inserted into the hole (42) of the body (34).

5. Adjustment device (32) according to any one of the preceding claims, wherein said elastically deformable connection element (64) is made as a flat spring which is rigidly connected at a first end thereof to the body (34) and projects from this end parallel to said longitudinal direction (x), and wherein the ratchet (62) is rigidly connected to a head portion (68) provided at the end of the flat spring (64) opposite to said first end.

6. Adjustment device (32) according to claim 5, wherein the head portion (68) of the flat spring (64) has an opening (70) in which the gearwheel (60) engages, so as to limit the translational movement of the gearwheel (60), and of the screw (46) therewith, away from the body (34) along the longitudinal direction (x).

7. Adjustment device (32) according to any one of the preceding claims, wherein said deformation means (72) comprise a bell crank having a first arm (74) and a second arm (76) which forms an angle greater than 90 degrees with the first arm (74), wherein said first arm (74) is longitudinally arranged between the gearwheel (60) and the body (34) and has a hole (78) through which said first shank portion (56) of the screw (46) passes freely, and wherein said second arm (76) is radially arranged between the body (34) and the connection element (64) and presses against the latter.

## Patentansprüche

1. Automatische Spieleinstellvorrichtung (32) für eine Trommelbremse (10), die einen Körper (34) aufweist, der dafür vorgesehen ist, mit einer ersten Backe (14) der Trommelbremse (10) zusammenzuwirken, und einen Einstellmechanismus (44, 46, 60, 62, 72) der dafür vorgesehen ist, mit einer zweiten Backe (16) der Trommelbremse (10) zusammenzuwirken, um den Abstand im Ruhezustand zwischen den Backen (14, 16) in Abhängigkeit von dem Verschleißpegel der Bremsbeläge (18, 20) einzustellen, die auf den Backen (14, 16) vorgesehen sind, wobei der Körper (34) an dem Ende desselben, das dem Einstellmechanismus (44, 46, 60, 62, 72) gegenüberliegt, mit einem Anschlagabschnitt (36) versehen ist, der ausgebildet ist, damit gegen denselben gedrückt werden kann, und um die erste Backe (14) in Eingriff zu nehmen, und an dem Ende desselben, das dem Einstellmechanismus (44, 46, 60, 62, 72) zugewandt ist, ein Loch (42) aufweist, dessen Achse sich entlang einer Längsrichtung (x) der Einstellvorrichtung (32) erstreckt,
wobei der Einstellmechanismus (44, 46, 60, 62, 64, 72) eine Schraubenmutter (44) und eine Schraube (46) aufweist, die sich entlang der Längsrichtung (x) erstrecken, wobei die Schraubenmutter (44) ausgebildet ist, um gegen die zweite Backe (16) gedrückt zu werden und um an der letzteren gehalten zu werden ohne Möglichkeit einer relativen Drehung um die Längsrichtung (x), und die Schraube (46) einen ersten Schaftabschnitt (56) umfasst, der in dem Loch (42) des Körpers (34) aufgenommen wird, um frei entlang der Längsrichtung (x) relativ zu dem Körper (34) gleiten zu können, und einen zweiten mit Gewinde versehenen Schaftabschnitt (58), auf den die Schraubenmutter (44) geschraubt ist, wobei die Drehung der Schraube (46) relativ zu der Schraubenmutter (44) eine relative Translationsbewegung dieser zwei Komponenten entlang der Längsrichtung (x) erzeugt,
wobei der Einstellmechanismus (44, 46, 60, 62, 64, 72) ferner eine Sperrklinkenvorrichtung (60, 62) aufweist, die ein Zahnrad (60) umfasst, das longitudinal zwischen dem ersten und zweiten Schraubabschnitt (56, 58) angeordnet ist und fest mit denselben verbunden ist, und eine Sperrklinke (62), die ausgebildet ist, um mit den Zähnen des Zahnrads (60) zusammenzuwirken,
wobei der Einstellmechanismus (44, 46, 60, 62, 64, 72) ferner ein elastisch verformbares Verbindungselement (64) aufweist, das die Sperrklinke (62) mit dem Körper (34) verbindet und konfiguriert ist, um in dem Ruhezustand die Sperrklinke (62) in Eingriff mit dem Zahnrad (60) zu halten, und um als Folge der Verformung desselben eine Außereingriffnahme der Sperrklinke (62) von dem Zahnrad (60) zu bewirken, und
wobei der Einstellmechanismus (44, 46, 60, 62, 64, 72) ferner eine Verformungseinrichtung (72) aufweist, die ausgebildet ist, um das Verbindungselement (64) zu verformen in Abhängigkeit von dem Betrag der relativen Translationsbewegung des Körpers (34) mit Bezug auf die Schraubenmutter (44) entlang der Längsrichtung (x), die sich von der relativen Bewegung der zwei Backen (14, 16) der Trommelbremse (10) ergibt, wobei, solange der Betrag der relativen Translationsbewegung des Körpers (34) bezüglich der Schraubenmutter (44) einen gegebenen Schwellenwert nicht überschreitet, die Sperrklinke (62) in Eingriff bleibt mit einem gleichen Zahn des Zahnrads (60), während wenn der Betrag der relativen Translationsbewegung des Körpers (34) bezüglich der Schraubenmutter (44) den Schwellenwert überschreitet, aufgrund der Abnutzung der Bremsbeläge (18, 20), die auf den Backen (14, 16) der Trommelbremse (10) vorgesehen sind, die Sperrklinke (62) einen folgenden Zahn des Zahnrads (60) in Eingriff nimmt, wodurch bewirkt wird, dass sich das Zahnrad (60) dreht und somit die Schraube (46) sich relativ zu der Schraubenmutter (44) entlang der Längsachse (x) verschiebt.

2. Einstellvorrichtung (32) gemäß Anspruch 1, bei der die Schraube (46) und das Zahnrad (60) als ein einzelnes Stück hergestellt sind.

3. Einstellvorrichtung (32) gemäß Anspruch 1 oder Anspruch 2, die ferner eine elastische Einrichtung (82) aufweist, die zwischen dem Körper (34) und der Schraube (46) wirkt, um dafür zu sorgen, die letztere von dem Loch (42) des Körpers (34) auszustoßen.

4. Einstellvorrichtung (32) gemäß Anspruch 3, bei der die elastische Einrichtung (82) eine Feder aufweist, die in das Loch (42) des Körpers (34) eingefügt ist.

5. Einstellvorrichtung (32) gemäß einem der vorhergehenden Ansprüche, bei der das elastisch verformbare Verbindungselement (64) als eine Flachfeder hergestellt ist, die an einem ersten Ende derselben fest mit dem Körper (34) verbunden ist und von diesem Ende parallel zu der Längsrichtung (x) vorsteht, und wobei die Sperrklinke (62) fest mit einem Kopfabschnitt (68) verbunden ist, der an dem Ende der Flachfeder (64) gegenüber dem ersten Ende vorgesehen ist.

6. Einstellvorrichtung (32) gemäß Anspruch 5, bei der der Kopfabschnitt (68) der Flachfeder (64) eine Öffnung (70) aufweist, in der das Zahnrad (60) Eingriff nimmt, um die Translationsbewegung des Zahnrads (60) und der Schraube (46) mit demselben weg von dem Körper (34) entlang der Längsrichtung (x) zu begrenzen.

7. Einstellvorrichtung (32) gemäß einem der vorhergehenden Ansprüche, bei der die Verformungseinrichtung (72) einen Winkelhebel mit einem ersten Arm (74) und einem zweiten Arm (76) aufweist, der einen Winkel von mehr als 90 Grad mit dem ersten Arm (74) bildet, wobei der erste Arm (74) longitudinal angeordnet ist zwischen dem Zahnrad (60) und dem Körper (34) und ein Loch (78) aufweist, durch das der erste Schaftabschnitt (56) der Schraube (46) frei verläuft, und wobei der zweite Arm (76) radial zwischen dem Körper (34) und dem Verbindungselement (64) angeordnet ist und gegen das letztere drückt.

## Revendications

1. Dispositif d'ajustement de jeu automatique (32) pour un frein de tambour (10), comprenant un corps (34) destiné à coopérer avec une première mâchoire (14) du frein de tambour (10) et un mécanisme d'ajustement (44, 46, 60, 62, 72) destiné à coopérer avec une seconde mâchoire (16) du frein de tambour (10) dans le but d'ajuster la distance, dans la condition de repos, entre lesdites mâchoires (14, 16) selon le niveau d'usure des patins de friction (18, 20) prévus sur lesdites mâchoires (14, 16),
dans lequel le corps (34) est prévu, sur ses extrémités opposées au mécanisme d'ajustement (44, 46, 60, 62, 72) avec une partie de butée (36) conçue pour être poussée contre la première mâchoire (14) et pour s'engager avec elle et présente sur son extrémité faisant face au mécanisme d'ajustement (44, 46, 60, 62, 72), un trou (42), dont l'axe s'étend le long d'une direction longitudinale (x) du dispositif d'ajustement (32),
dans lequel le mécanisme d'ajustement (44, 46, 60, 62, 64, 72) comprend une vis à écrou (44) et une vis (46) qui s'étendent le long de la direction longitudinale (x), la vis à écrou (44) étant conçue pour être poussée contre la seconde mâchoire (16) et pour être contrainte sur cette dernière sans possibilité de rotation relative autour de ladite direction longitudinale (x) et la vis (46) incluant une première partie de tige (56) reçue dans le trou (42) du corps (34) de sorte à être libre de glisser le long de ladite direction longitudinale (x) par rapport au corps (34), et une seconde partie de tige filetée (58), sur laquelle la vis à écrou (44) est vissée, moyennant quoi la rotation de la vis (46) par rapport à la vis à écrou (44) produit un mouvement de translation relatif de ces deux composants le long de ladite direction longitudinale (x),
dans lequel le mécanisme d'ajustement (44, 46, 60, 62, 64, 72) comprend en outre un dispositif d'encliquetage (60, 62) incluant une roue d'engrenage (60) qui est agencée longitudinalement entre lesdites première et seconde parties de vis (56, 58) et est reliée rigidement à celles-ci, et un cliquet (62) conçu pour coopérer avec les dents de la roue d'engrenage (60),
dans lequel le mécanisme d'ajustement (44, 46, 60, 62, 64, 72) comprend en outre un élément de liaison déformable élastiquement (64) qui relie le cliquet (62) au corps (34) et est configuré de sorte à maintenir dans la condition de repos le cliquet (62) engagé avec la roue d'engrenage (60) et à entraîner, suite à sa déformation, le désengagement du cliquet (62) de la roue d'engrenage (60) et
dans lequel le mécanisme d'ajustement (44, 46, 60, 62, 64, 72) comprend en outre des moyens de déformation (72) conçus pour déformer l'élément de liaison (64) dépendant de la quantité de mouvement de translation relatif du corps (34) par rapport à la vis d'écrou (44) le long de la direction longitudinale (x) résultant du mouvement relatif des deux mâchoires (14, 16) du frein de tambour (10), moyennant quoi tant que la quantité du mouvement de translation relatif du corps (34) par rapport à la vis d'écrou (44) n'excède pas un seuil donné, le cliquet (62) reste engagé avec une même dent de la roue d'engrenage (60), alors que lorsque la quantité du mouvement de translation relatif du corps (34) par rapport à la vis d'écrou (44) excède ledit seuil, en raison de l'usure de patins de friction (18, 20) prévus sur les mâchoires (14, 16) du frein de tambour (10), le cliquet (62) s'engage avec une dent suivante de la roue d'engrenage (60), amenant par là-même la roue d'engrenage (60) à tourner et par conséquent la vis (46) à translater par rapport à la vis d'écrou (44) le long de l' axe longitudinal (x).

2. Dispositif d'ajustement (32) selon la revendication 1, dans lequel la vis (46) et la roue d'engrenage (60) sont faites en une seule pièce.

3. Dispositif d'ajustement (32) selon la revendication 1 ou 2, comprenant en outre des moyens élastiques (82) agissant entre le corps (34) et la vis (46) de sorte à tendre à éjecter cette dernière du trou (42) du corps (34).

4. Dispositif d'ajustement (32) selon la revendication 3, dans lequel lesdits moyens élastiques (82) comprennent un ressort inséré dans le trou (42) du corps (34).

5. Dispositif d'ajustement (32) selon l'une quelconque des revendications précédentes, dans lequel ledit élément de liaison déformable élastiquement (64) est constitué comme un ressort plat qui est rigidement relié sur une première extrémité de celui-ci au corps (34) et fait saillie de cette extrémité parallèlement à ladite direction longitudinale (x) et dans lequel le cliquet (62) est rigidement relié à une partie de tête (68) prévue sur l'extrémité du ressort plat (64) opposée à ladite première extrémité.

6. Dispositif d'ajustement (32) selon la revendication 5, dans lequel la partie de tête (68) du ressort plat (64) a une ouverture (70), dans laquelle la roue d'engrenage (60) s'engage de sorte à limiter le mouvement de translation de la roue d'engrenage (60) et de la vis (46) avec celle-ci, loin du corps (34) le long de la direction longitudinale (x).

7. Dispositif d'ajustement (32) selon l'une quelconque des revendications précédentes, dans lequel lesdits moyens de déformation (72) comprennent un levier coudé présentant un premier bras (74) et un second bras (76) qui forme un angle supérieur à 90 degrés avec le premier bras (74), dans lequel ledit premier bras (74) est agencé longitudinalement entre la roue d'engrenage (60) et le corps (34) et présente un trou (78), par lequel ladite première partie de tige (56) de la vis (46) passe librement, et dans lequel ledit second bras (76) est radialement agencé entre le corps (34) et l'élément de liaison (64) et presse contre ce dernier.
